(19) Europäisches Patentamt

European Patent Office

Office européen des brevets

(11) Veröffentlichungsnummer: **0 266 599 B1**

# (12) EUROPÄISCHE PATENTSCHRIFT

(45) Veröffentlichungstag der Patentschrift: **06.05.92**

(21) Anmeldenummer: **87115132.0**

(22) Anmeldetag: **16.10.87**

(51) Int. Cl.⁵: **C01F 7/40**, C01F 5/40

(54) **Verfahren zur Gewinnung von Magnesiumsulfaten.**

(30) Priorität: **03.11.86 DE 3637226**

(43) Veröffentlichungstag der Anmeldung:
**11.05.88 Patentblatt 88/19**

(45) Bekanntmachung des Hinweises auf die
Patenterteilung:
**06.05.92 Patentblatt 92/19**

(84) Benannte Vertragsstaaten:
**AT BE CH ES FR GB GR IT LI LU NL SE**

(56) Entgegenhaltungen:
**DE-B- 1 158 912      DE-B- 1 201 782
DE-B- 1 938 973      DE-B- 1 938 974
DE-C- 3 146 295      DE-C- 3 334 665**

(73) Patentinhaber: **KALI + SALZ AG
Friedrich-Ebert-Strasse 160
W-3500 Kassel(DE)**

(72) Erfinder: **Singewald, Arno, Prof. Dr.
Michelswiesenweg 1
W-3500 Kassel(DE)**
Erfinder: **Neitzel, Ulrich, Dr.
Am Donarbrunnen 28
W-3500 Kassel(DE)**
Erfinder: **Fricke, Günter, Dr.
Akazienweg 18
W-6430 Bad Hersfeld(DE)**

## Beschreibung

Die Erfindung betrifft ein Verfahren zur Gewinnung von Magnesiumsulfaten aus Rohsalzgemischen, insbesondere aus Hartsalzen.

Die klassische Methode der $MgSO_4$-Gewinnung besteht darin, den Rückstand des Heißlöseprozesses, der sich im wesentlichen aus Steinsalz und Kieserit (Magnesiumsulfatmonohydrat) zusammensetzt, mit kaltem Wasser zu behandeln und das Steinsalz vollkommen aufzulösen, ("Ullmanns Encyklopädie der Technischen Chemie",4. Auflage, Bd. 13, Seite 483.)

Dabei fallen je Tonne erzeugten Kieserits mindestens 15 m³ Steinsalzlösung an, deren Beseitigung schon immer Schwierigkeiten machte und in zunehmendem Maße die Produktion behinderte. Mit sinkendem $MgSO_4$-Gehalt im Rohsalz werden diese Volumina sogar noch größer.

Zwar unterscheidet sich die Lösegeschwindigkeit des Kieserits stark von der des NaCl; dennoch gehen beachtliche Mengen $MgSO_4$ in Lösung, so daß, insgesamt gesehen, bei Heiß- und Kaltlöseprozeß nur $MgSO_4$-Ausbeuten von etwa 60 % zu verzeichnen sind.

Da auch andere Bestandteile des Rohsalzes relativ geringe Lösegeschwindigkeit in Wasser besitzen, finden sich Minerale wie Anhydrit, Polyhalit und Langbeinit praktisch vollständig beim Kieserit wieder und beeinträchtigen die Verwertbarkeit.

Das wird vor allem dadurch sehr ausgeprägt, daß in zunehmendem Maß auch Rohsalze abgebaut werden müssen, die mäßige Kieseritgehalte und deutliche Anteile der erwähnten Nebenmineralien aufweisen.

Unter diesen Bedingungen hat es sich als äußerst schwierig gezeigt, reine Produkte mit hoher $MgSO_4$-Ausbeute zu erzeugen.

Durch Einführung der elektrostatischen Trennung war es erstmals möglich, Kieseritkonzentrate trocken zu gewinnen und den Abwasseranfall drastisch zu reduzieren.

Die DE-Patente 12 83 772, 17 92 120, 19 53 534, 26 19 026, 31 46 295 befassen sich mit der Abtrennung von NaCl, wobei an der positiven Elektrode Kieserit und Kalianteile anfallen.

In der DE-Patent 31 46 295, Spalte 5 und 6, wird gezeigt, daß es gelingt, einen Teil des Anhydrits mit dem Steinsalz abzuscheiden. Diese Trennung gelingt allerdings nur sehr unvollkommen, so daß der weiterhin verbleibende Anhydrit die Qualität des Kieserits beeinflussen kann.

Die DE-Patente 10 78 961, 12 61 453, 16 67 814 befassen sich mit der Gewinnung eines verkaufsfähigen Kieseritprodukts. Es liegt in der Natur der elektrostatischen Trennung, daß auf der einen Seite ein Wertstoff abgetrennt wird und auf der anderen Seite, die wegen der gegenseitigen Aufladung vorhanden sein muß, auch etwas Wertstoff mit abgeführt wird, so daß $MgSO_4$-Ausbeute-Verluste entstehen.

Das Rein-Produkt, das auf trockenem Wege erzeugt wird, darf höchstens 1,5 % Chlorid und muß mindestens 81 % $MgSO_4$ (das sind - in Kieserit ausgedrückt - mindestens 93 % $MgSO_4 \cdot H_2O$), enthalten. Es hat sich herausgestellt, daß nur ein Teil des vorhandenen $MgSO_4$ in der Qualität des Verkaufsprodukts Kieserit hergestellt werden kann. Der übrige Anteil war auf elektrostatischem Wege bisher nicht zu verwerten, geht entweder ungenutzt verloren oder in den Heißlöseprozeß.

Es ist zwar möglich, nach der Extraktion des KCl aus dem nunmehr allerdings stark verarmten Heißlöserückstand wieder eine sogenannte Kieseritwäsche durchzuführen, jedoch finden hierbei eine erhebliche Hydratation des Magnesiumsulfatmonohydrats und damit Auflöseprozesse statt, bei denen das Magnesiumsulfat zusammen mit Steinsalz verloren geht in beachtlichen Volumina natriumchloridreicher Lösungen.

Es ist auch vorgeschlagen worden, aus einem Heißlöserückstand der Hartsalzaufbereitung, also einem Kieserit-NaCl-Gemisch, den Kieserit durch Flotation zu gewinnen ("Bergakademie", 16. Jahrg., Heft 6, Juni 1964).

Aber bei dem vorhandenen großen Steinsalzüberschuß und den dabei notwendigen hohen Verweilzeiten des nassen Gutes und der dadurch verursachten hohen Löseverluste waren die $MgSO_4$-Ausbeuten wenig zufriedenstellend und auch die $MgSO_4$-Konzentrate von mäßiger Qualität (Tab. S.360).

Die Gewinnungsverfahren, die nur aus einem elektrostatischen Trennverfahren oder nur aus einer naßchemischen Behandlung, insbesondere einer Flotation bestehen, ergeben aus den dargelegten Gründen relativ hohe Ausbeuteverluste.

Demzufolge liegt der Erfindung die Aufgabe zugrunde, aus Rohsalzgemischen, inbesondere aus Hartsalzen, und insbesondere auch solchen, die nur mäßige Kieseritgehalte besitzen und daneben deutliche Gehalte an Anhydrit, Kainit, Polyhalit und Langbeinit aufweisen, das $MgSO_4$ mit hoher Ausbeute und geringstem Abwasseranfall zu gewinnen.

Nach der Erfindung ist das Verfahren durch folgende Verfahrensschritte gekennzeichnet :

a) das Rohsalzgemisch wird einer ersten elektrostatischen Behandlung unterworfen, wobei zunächst NaCl als Abfall anfällt, und außerdem eine Kali-Kieserit-Fraktion, die in einem weiteren Trennschritt in ein Rohkali und einen Rohkieserit, die jeweils in gesonderten Stufen zu einem Magnesiumsulfat-Monohydrat(Kieserit)-Konzentrat hoher Reinheit und Reinkali weiterverarbeitet werden, worauf die in den einzelnen Stufen anfallenden magnesiumsulfathaltigen Restmaterialien gesammelt werden;

b) die gesammelten magnesiumsulfathaltigen Restmaterialien werden in einer NaCl- und KCl-gesättigten kalten Lösung angemaischt und einer Schaumflotation unterworfen, wobei die restlichen Kieseritbestandteile zusammen mit anderen $MgSO_4$-haltigen Mineralien und Anhydrit ($MgSO_4$-haltiges Konzentrat) aufschwimmen und ein KCl- und NaCl-haltiger Rückstand, zurückbleibt;

c) der KCl- und NaCl-haltige Rückstand wird einem Heißlöseprozeß unterworfen, wobei ein KCl-Produkt gewonnen wird sowie ein NaCl-haltiger Rückstand als Abfall entsteht.

Die einzelnen Verfahrensschritte werden die nachstehend näher spezifiziert:

a) ein Rohsalzgemisch, insbesondere ein Hartsalz, das Magnesiumsulfat im wesentlichen in Form des Kieserits ($MgSO_4.H_2O$), aber auch in Form des Polyhalits, Langbeinits und Kainits enthält, wird einer Reihe von elektrostatischen Trennungen unterzogen, wobei zunächst Steinsalz als Abfall anfällt (und aufgehaldet wird) und außerdem eine Kali-Kieserit-Fraktion, die in einem weiteren Trennschritt in ein Rohkali und einen Rohkieserit, die jeweils in gesonderten Stufen zu einem Reinkieserit und Reinkali weiterverarbeitet werden. Dabei fallen jeweils an der gegenüberliegenden Elektrode Restfraktionen an, außerdem in allen Trennstufen Filter-und Zyklonstäube, die mit den Restfraktionen gesammelt werden;

b) diese magnesiumsulfathaltigen Restmaterialien werden in einer kalten, an KCl und NaCl gesättigten Lösung, die daneben noch 10 bis 250 g/l $MgCl_2$ und 10 bis 100 g/l $MgSO_4$ enthalten kann, angemaischt und mit Hilfe der bereits aus der Verfahrensstufe a vorhandenen Konditionierungsmittel, insbesondere der Fettsäuren, und unter Zugabe geringer Mengen weiterer spezifischer Sammlerreagentien, wie Alkylsulfat, Alkylsulfonat und/oder sulfatisierte Fettsäuren (z.B. Prästaminol) einer Schaumflotation unterzogen, wobei die $MgSO_4$-haltigen Mineralien aufschwimmen und NaCl und KCl im Rückstand verbleiben;

c) der KCl/NaCl-Rückstand, der nach der Abtrennung der $MgSO_4$-Komponenten durch die Schaumflotation nun einem Quasi-Sylvinit entspricht, wird einem konventionellen Heißlöseprozeß unterzogen, der sich insofern einfacher gestaltet als die "Hartsalzbedingungen", bei denen viel $MgSO_4$ vorhanden ist, die das Erreichen einer 60er Qualität erschweren, nicht mehr bestehen. Da im Aufgabematerial nur noch sehr wenig $MgSO_4$-Salze vorhanden sind, kann sich auch nicht mehr viel $MgSO_4$ in den Umlauflaugen auflösen. Bei dem sich daraus ergebenden niedrigen $MgSO_4$-Spiegel in den Umlauflaugen entfällt die Gefahr der Doppelsalzbildung. Eventuell vorhandener Carnallit hat sich bereits beim Anmaischen zur Flotation zersetzt und resultierendes $MgCl_2$ geht in die Flotationslaugen, so daß sich in den Umlauflaugen des Heißlösebetriebes nur ein geringer $MgCl_2$-Gehalt einstellen kann; eine Vorbedingung für einen "Sylvinit"-Heißlöseprozeß. Dies hat weiterhin zur Folge, daß zur Erreichung eines KCl-Produktes mit 60 % $K_2O$ wenig bzw. kein Frischwasser eingesetzt werden muß, was für einen Wasserhaushalt des Löseprozesses von eminenter Bedeutung ist. Der Löseprozeß erzeugt also praktisch keine Abstoßlaugen.

d) Das Schaumkonzentrat aus der Verfahrensstufe b, das alle $MgSO_4$-Mineralien, wie Kainit, Langbeinit und Polyhalit enthält, neben dem restlichen Kieserit, der in der elektrostatischen Trennung nicht zu gewinnen war, wird zur weiteren Reinigung gegebenenfalls einer Nachflotation unterzogen und mit wenig Wasser gewaschen, um evtl. mitgerissenes Steinsalz zu entfernen. Das praktisch NaCl-freie $MgSO_4$-Konzentrat, das außerdem noch Anhydrit enthält, der während der elektrostatischen Trennung mitwanderte und auch bei der Flotation mitschwimmt, wird mit einer zurückgeführten $MgSO_4$-Lösung bei 75 bis 80° C behandelt, wobei das $MgSO_4$ in Lösung geht. Der Rückstand, der im wesentlichen aus Anhydrit besteht, wird entfernt und die heiße, praktisch $MgSO_4$-gesättigte Lösung gekühlt, wobei $MgSO_4$-Heptahydrat (Bittersalz) kristallisiert. Die verbleibende Mutterlauge wird zum erneuten Auflösen von $MgSO_4$ zurückgeführt.

Das Bittersalz kann in getrockneter Form als Verkaufsprodukt oder filterfeucht zur Umsetzung zu Alkalisulfat dienen.

Bei dem erfindungsgemäßen Prozeß entstehen also zwei $MgSO_4$-Produkte, einmal auf trockenem Wege das Magnesiumsulfatmonohydrat (Kieserit), das eine tolerierbare Menge Chlorid enthält (< 1,5 % Cl) und zum anderen ein kristallisiertes $MgSO_4$-Heptahydrat, das sehr wenig Chlorid (< 0,1 % Cl) enthält, als solches vielseitig verwendbar ist und auch zu chloridfreien Chemikalien und Düngern weiterverarbeitet werden kann.

Die Maßnahmen der Erfindung gewährleisten eine hohe Ausbeute bei der $MgSO_4$-Gewinnung - das eigentliche Ziel der Erfindung - und schaffen aber außerdem auch günstige Bedingungen für die Kaligewinnung.

Anhand des folgenden Beispiels soll die Erfindung weiter verdeutlicht werden. Einen detaillierten Überblick bietet das Fließschema I.

**Beispiel:**

100 t eines Hartsalzes der Zusammensetzung:
8,1 % magnesiumsulfathaltige Mineralien
11,2 % Sylvin
19,6 % Carnallit
1,5 % Anhydrit
59,6 % Steinsalz
werden auf unter 1,6 mm vermahlen und einer elektrostatischen Trennung im Freifallscheider unterworfen, wobei als Konditionierungsmittel ein Gemisch von 40 g/t Salizylsäure und 60 g/t Milchsäure, eine Temperatur von 48°C und eine relative Luftfeuchte von 10 % zur Anwendung kommen.

40,5 t Steinsalzrückstand fallen an der negativen Elektrode an und werden aufgehaldet. Das an der positiven Elektrode anfallende Konzentrat, das das Kali und die Magnesiumsulfat-Komponente enthält, wird in einer weiteren elektrostatischen Stufe bei 62°C und 5 % Luftfeuchtigkeit in ein Rohkali und einen Rohkieserit gespalten.

Das Rohkali wird unter Zusatz von 14 g/t Salizyl- und 36 g/t Fettsäure als Konditionierungsmittel bei 53°C und 7,5 % Luftfeuchtigkeit in einen reinen Kaliwertstoff (18,7 t) und eine Restfraktion umgewandelt. Aus dem Rohkieserit entstehen in einer weiteren elektrostatischen Trennung unter Zusatz von 30 g/t Fettsäure und 60 g/t Ammonacetat als Konditionierungsmittel 5,0 t Reinkieserit mit 1,5 % Cl und eine Restfraktion.

Beide Restfraktionen werden nun vereinigt, mit Filterstäuben und Zyklonstäuben aus den Vortrennungen gemischt (insgesamt 35,8 t) und in 80 t Traglauge, die 200 g/l $MgCl_2$ und 50 g/l $MgSO_4$ enthält und außerdem KCl und NaCl gesättigt ist, angemaischt.

Unter Zusatz von 70 g/t Prästaminol, 20 g/t Teeröl und 10 g/t Polyacrylamid werden 3 t $MgSO_4$-Flotationskonzentrat aufgeschwommen, durch Zentrifugieren von der Flotationslauge getrennt und mit wenig Wasser gewaschen.

Bei 75°C wird dieses Magnesiumsulfat-Konzentrat in einer zurückgeführten $MgSO_4$-Lösung aufgelöst und die Lösung auf 25°C abgekühlt, wobei 4 t Magnesiumsulfat-Heptahydrat kristallisieren; die Mutterlauge wird zurückgeführt.

Der Unterlauf (Rückstand) der Flotation wird ebenfalls filtriert und einem konventionellen Heißlöseprozeß unterzogen, wobei als Endprodukt 6,1 t Kaliumchlorid erzeugt werden. Der NaCl-Rückstand geht zur Halde.

Das im Rohsalz vorhandene Magnesiumsulfat wird zu 82 % zu hochprozentigen $MgSO_4$-Produkten umgesetzt.

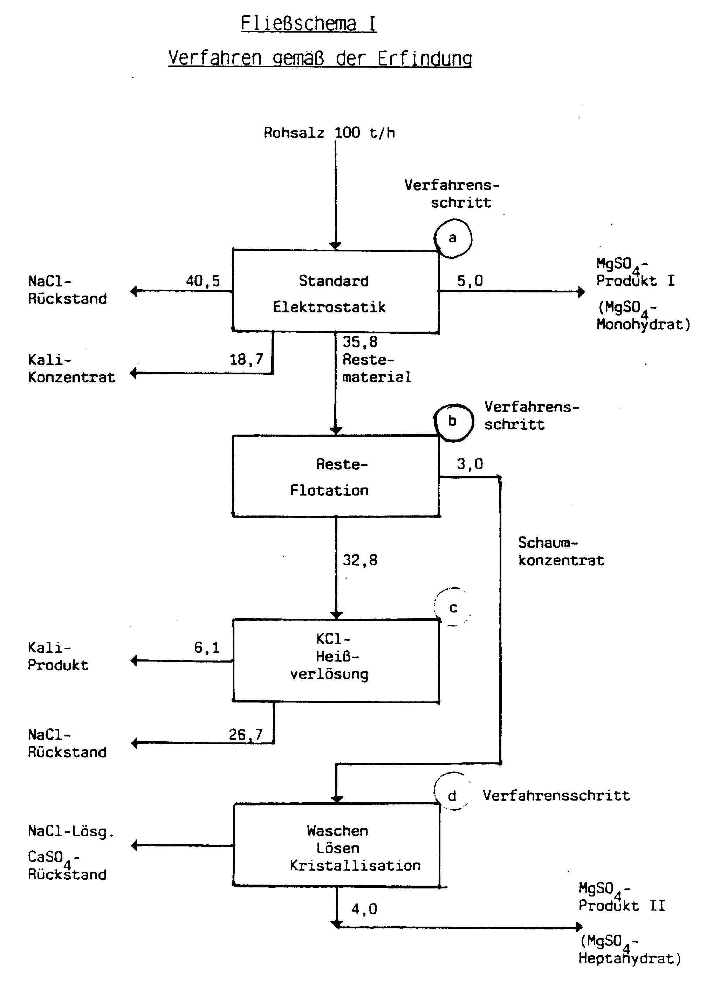

**Patentansprüche**

1. Verfahren zur Gewinnung von Magnesiumsulfaten aus Rohsalzgemischen, insbesondere aus Hartsalzen, die Steinsalz, Kali, und Magnesiumsulfat im wesentlichen in Form des Kieserits ($MgSO_4 \cdot H_2O$), aber auch in Form des Polyhalits, Langbeinits und Kainits enthalten <u>gekennzeichnet</u> durch folgende <u>Verfahrensschritte</u>:

   a) das Rohsalzgemisch wird einer ersten elektrostatischen Behandlung unterworfen, wobei zunächst NaCl als Abfall anfällt, und außerdem eine Kali-Kieserit-Fraktion, die in einem weiteren Trennschritt in ein Rohkali und einen Rohkieserit, die jeweils in gesonderten Stufen zu einem Magnesiumsulfat-Monohydrat(Kieserit)-Konzentrat hoher Reinheit und Reinkali weiterverarbeitet werden, worauf die in den einzelnen Stufen anfallenden magnesiumsulfathaltigen Restmaterialien gesammelt werden;

   b) die gesammelten magnesiumsulfathaltigen Restmaterialien werden in einer NaCl- und KCl-gesättigten kalten Lösung angemaischt und einer Schaumflotation unterworfen, wobei die restlichen Kieseritbestandteile zusammen mit anderen $MgSO_4$-haltigen Mineralien und Anhydrit ($MgSO_4$-haltiges Konzentrat) aufschwimmen und ein KCl- und NaCl-haltiger Rückstand zurückbleibt;

   c) der KCl- und NaCl-haltige Rückstand wird einem Heißlöseprozeß unterworfen, wobei ein KCl-Produkt gewonnen wird sowie ein NaCl-haltiger Rückstand als Abfall entsteht.

2. Verfahren nach Anspruch 1, dadurch gekennzeichnet, daß ein zusätzlicher <u>Verfahrensschritt d</u> hinzukommt:

   d) Das aus dem Verfahrensschritt b anfallende magnesiumsulfathaltige Konzentrat wird durch Waschen von NaCl befreit und durch Heißlösen und anschliessendes Kristallisieren auf Magnesumsulfatheptahydrat weiterverarbeitet.

3. Verfahren nach Anspruch 1, dadurch gekennzeichnet, daß bei der <u>Schaumflotation gemäß Verfahrensschritt</u> b die aus dem Verfahrensschritt a stammenden Konditionierungsmittel als Flotationsreagenzien verwendet werden.

4. Verfahren nach Anspruch 1, dadurch gekennzeichnet, daß als zusätzliche <u>Flotationsreagenzien Alkylsulfat</u> oder Alkylsulfonate und/oder Prästaminol als Sammlerreagenzien zugesetzt werden, vorzugsweise in einer Menge von 50 - 80 g/t.

5. Verfahren nach Anspruch 1, dadurch gekennzeichnet, daß dem magnesiumsulfathaltigen Restmaterial als Ausgangsmaterial für die Schaumflotation auch noch Zyklonstaub, der bei der elektrostatischen Trennung anfällt, zugesetzt wird.

6. Verfahren nach Anspruch 1, dadurch gekennzeichnet, daß dem magnesiumsulfathaltigen Restmaterial als Ausgangsmaterial für die Schaumflotation auch Rohsalze bzw. Rohsalzanteile zugemischt werden.

7. Verfahren nach Anspruch 1, dadurch gekennzeichnet, daß dem magnesiumsulfathaltigen Restmaterial als Ausgangsmaterial für die Schaumflotation auch Feinstfraktionen, insbesondere magnesiumsulfathaltige Stäube, die vor der elektrostatischen Behandlung bei der Aufbereitung des Rohsalzes anfallen, zugemischt werden.

8. Verfahren nach Anspruch 1, dadurch gekennzeichnet, daß als Ausgangsstoffe auch solche magnesiumsulfathaltigen Materialien verwendet werden, die außer Kieserit auch Kainit und/oder Langbeinit, Polyhalit, Schönit und Leonit enthalten.

9. Verfahren nach Anspruch 2, dadurch gekennzeichnet, daß das im Verfahrensschritt d gewonnene Magnesiumsulfatheptahydrat mit Alkalichlorid zu Alkalisulfat umgesetzt wird.

## Claims

1. Process for preparing magnesium sulphates from crude salt mixtures, in particular from hard salt ore, containing rock salt, potash and magnesium sulphate, essentially in the form of kieserite ($MgSO_4 \cdot H_2O$), but also in the form of polyhalite, langbeinite and kainite, characterized by the following steps:
   a) the crude salt mixture is subject to a first electrostatic treatment, whereby first of all sodium chloride accumulates as waste, furthermore a potash-kieserite-fraction, being processed in a second separation step into a crude potash and a crude kieserite, said crude potash and crude kieserite being processed in special steps into a magnesium sulphate-monohydrate (kieserite)-concentrate of high purity and pure potash, whereupon the residual materials containing magnesium sulphate, accumulated within the individual steps, are collected,
   b) the collected residual materials containing magnesium sulphate are mixed with a NaCl- and KCl-saturated solution and subjected to a foam flotation process, whereby the remaining kieserite portions are floated together with other minerals containing $MgSO_4$ and anhydrite (concentrate containing $MgSO_4$), and a residue containing KCl and NaCl remains as underflow,
   c) the residue containing KCl and NaCl is subject to a hot leach process, thus yielding a KCl product as well as residue containing NaCl as waste.

2. Process according to claim 1, characterized by an additional step d):
   d) from the concentrate containing magnesium sulphate, accumulated in process step b), the NaCl is extracted by washing; the new concentrate being processed to magnesium sulphate heptahydrate by thermal dissolution and cooling crystallization.

3. Process according to claim 1, characterized in that the conditioning agents from process step a) are used as flotation reagents in the foam flotation of process step b).

4. Process according to claim 1, characterized in that as additional flotation reagents, alkyl sulphate or alkyl sulphonates and/or Praesteminol are added as collectors, preferably in an amount of 50 through 80 g/ton.

5. Process according to claim 1, characterized in that cyclone dust resulting from the electrostatic separation is added to the residual material containing magnesium sulphate as starting material for the foam flotation process.

6. Process according to claim 1, characterized in that crude salts ore and crude salt fractions are mixed with the residual material containing magnesium sulphate as starting material for the foam flotation process.

7. Process according to claim 1, characterized in that fine fractions, especially dust containing sulphate, resulting from the preparation of the crude salt prior to the electrostatic treatment, are mixed with the residual material containing magnesium sulphate as starting material for the foam flotation process.

**8.** Process according to claim 1, characterized in that such materials containing magnesium sulphate are used as starting substances, which also contain kainite and/or langbeinite, polyhalite, schoenite and leonite beside kieserite.

**9.** Process according to claim 2, characterized in that the magnesium sulphate heptahydrate recovered from process step d) is converted to alkali sulphate by introducing alkali chloride.

**Revendications**

**1.** Procédé de préparation de sulfates de magnésium à partir de mélanges de sel brut, en particulier de sels durs (Hartsalz) contenant le sel gemme, la potasse et le sulfate de magnésium, essentiellement en forme de kiesérite ($MgSO_4.H_2O$), mais aussi en forme de polyhalite, langbeinite ($K_2SO_4.2MgSO_4$) et kainite, caractérisé par les phases opérationnelles suivantes:

a) Le mélange de sel brut est soumis à un premier traitement électrostatique, où le NaCl est d'abord produit comme déchets, et en plus une fraction de potasse-kiesérite qui, dans une autre phase de séparation, est converti en potasse brut et kiesérite brut qui chacune dans des étapes particulières sont traitées en concentré de sulfate de magnésium monohydrate (kiesérite) d'une haute pureté et de la potasse pure, après quoi les matières restantes contenant du sulfate de magnésium sont collectionnées,

b) les matières restantes collectionnées, contenant du sulfate de magnésium sont détrempées dans une solution froide, saturées de NaCl et KCl, et soumises d'une flottation où les composants restants de kiesérite flottent avec d'autres minéraux contenant $MgSO_4$ et le anhydrite (concentré contenant du $MgSO_4$), et il y a du résidu contenant NaCl,

c) le résidu contenant du KCl et NaCl est soumis à un procédé thermique de solution, où un produit KCl est extrait, puis, il y a un résidu contenant du sulfate de NaCl comme déchets.

**2.** Procédé suivant la revendication 1, caractérisé en ce qu'une phase opérationnelle additionnelle d) est ajoutée:

d) Le concentré contenant du sulfate de magnésium produit dans la phase opérationnelle b) est dégagé du NaCl par lavage et traité ultérieurement par la solution thermique et, puis, cristallisation pour donner du sulfate de magnésium heptahydrate.

**3.** Procédé suivant la revendication 1, caractérisé en ce que dans la flotattion selon phase opérationnelle b) les agents de conditionnement provenant de la phase opérationnelle a) sont utilisés comme réactifs de flottation.

**4.** Procédé suivant la revendication 1, caractérisé en ce que comme réactifs de flottation additionnel sont ajoutés le sulfate alkyle ou le sulfonate alkyle et/ou le praestaminol comme réactifs de collecteur, de préférence dans une quantité de 50 à 80 g/t.

**5.** Procédé suivant la revendication 1, caractérisé en ce qu'à la matière restante contenant du sulfate de magnésium est ajoutée comme matière première pour la flottation aussi la poussière cyclone produite lors de la séparation électrostatique.

**6.** Procédé suivant la revendication 1, caractérisé en ce qu'à la matière restante contenant du sulfate de magnésium comme matière première pour la flottation sont ajoutés aussi des sels bruts ou bien des quote-parts de sel brut.

**7.** Procédé suivant la revendication 1, caractérisé en ce qu'à la matière restante contenant du sulfate de magnésium comme matière première pour la flottation sont ajoutés aussi des fractions les plus fines, surtout de poussières contenant du sulfate de magnésium, étant produit avant le traitement électrostatique lors du traitement de sels bruts.

**8.** Procédé suivant la revendication 1, caractérisé en ce que comme matières premières sont utilisées aussi de telle matières contenant du sulfate de magnésium qui en dehors de la kiesérite contiennent également du kainite et/ou langbeinite ($K_2SO_4.2MgSO_4$), du polyhalite, schoenite et léonite.

**9.** Procédé suivant la revendication 2, caractérisé en ce que le sulfate héptahydrate de magnésium produit dans la phase opérationnelle d) est transformé en sulfate d'alcali moyen de chlorure d'alcali.

# Fließschema I

## Verfahren gemäß der Erfindung

Rohsalz 100 t/h

Verfahrensschritt

(a)

NaCl-
Rückstand ← 40,5 | Standard
Elektrostatik | 5,0 → MgSO$_4$-
Produkt I

(MgSO$_4$-
Monohydrat)

Kali-
Konzentrat ← 18,7

35,8
Restematerial

Verfahrensschritt

(b)

Reste-
Flotation | 3,0

Schaumkonzentrat

32,8

(c)

Kali-
Produkt ← 6,1 | KCl-
Heißverlösung

NaCl-
Rückstand ← 26,7

(d) Verfahrensschritt

NaCl-Lösg.
CaSO$_4$-
Rückstand ← | Waschen
Lösen
Kristallisation

4,0 → MgSO$_4$-
Produkt II

(MgSO$_4$-
Heptahydrat)

7